# EUROPÄISCHE PATENTANMELDUNG

(11) **EP 4 212 318 A1**
(43) Veröffentlichungstag der Anmeldung: **19.07.2023**
(21) Anmeldenummer: 23160399.4
(22) Anmeldetag: 14.11.2019
(51) Int. Cl.: B29C 70/08, B29D 99/00, B60R 13/08, B29C 70/46, B29C 70/12, B29C 70/86, B62D 33/04, B32B 3/08, B32B 3/26, B32B 5/18, B32B 27/06

(54) **ISOLIERPANEEL, KOMPONENTE EINES FAHRZEUGAUFBAUS, FAHRZEUGAUFBAU UND FAHRZEUG**

(30) Priorität: 23.11.2018 DE 102018129606
(62) Teilanmeldung aus: 19209116.3
(71) Anmelder: Kögel Trailer GmbH, 89349 Burtenbach (DE)
(72) Erfinder: PRÖBSTLE, Roman, 89359 Kötz (DE); RULEWSKI, Marcel, 86637 Zusamaltheim (DE); GRINBOLD, Matthias, 74541 Vellberg (DE); BIRLE, Günter, 86877 Walkertshofen (DE)
(74) Vertreter: Meissner Bolte Partnerschaft mbB

(57) **Zusammenfassung**

Die vorliegende Erfindung betrifft ein Isolierpaneel für einen Fahrzeugaufbau, insbesondere Kühlfahrzeugaufbau, mit wenigstens einer wärmedämmenden Kernschicht (10) und wenigstens zwei Deckschichten (11) aus einem faserverstärkten Kunststoffmaterial, die auf der Kernschicht (10) einander gegenüber angeordnet sind, wobei die Kernschicht (10) wenigstens eine Verbindungsöffnung (12) aufweist, die durch die Deckschichten (11) ausgefüllt ist, so dass die Deckschichten (11) durch die Kernschicht (10) hindurch miteinander stoffschlüssig verbunden sind, wobei wenigstens ein Einlageelement (15) im Bereich der Verbindungsöffnung (12) angeordnet ist, das als Verstärkungsplatte zur Befestigung von Anbauteilen an dem Isolierpaneel und/oder zur Erhöhung der Stabilität des Isolierpaneel ausgebildet ist. Ferner betrifft die vorliegende Erfindung eine Komponente eines Fahrzeugaufbaus, einen Fahrzeugaufbau und ein Fahrzeug.

## Beschreibung

Die Erfindung betrifft ein Isolierpaneel, eine Komponente eines Fahrzeugaufbaus, einen Fahrzeugaufbau und ein Fahrzeug. Ein Isolierpaneel gemäß dem Oberbegriff des Patentanspruchs 1 ist beispielsweise aus der WO 99/50060 A1 bekannt.

Im Nutzfahrzeugbau werden üblicherweise Metalldeckplatten zur Herstellung von Isolierpaneelen verwendet, die parallel und mit einem Zwischenraum angeordnet werden. In den Zwischenraum wird eine Flüssigkeit eingebracht und zur Bildung einer Dämmschicht aufgeschäumt. Die Herstellung geschäumter Isolierpaneele ist aufwendig und kostenintensiv, da der Schaum die im Zwischenraum enthaltene Luft verdrängen und diesen ausfüllen muss. Überdies bestehen Einschränkungen hinsichtlich der Form und Größe der so gefertigten Isolierpaneele. Eine weitere Möglichkeit zur Herstellung von Isolierpaneelen sind geklebte Paneele, bei denen vorgefertigte Dämmschichten und Decklagen verklebt werden. Auch hier unterliegen die Form und Größe der Isolierpaneele Einschränkungen.

Aus der eingangs genannten WO 99/50060 A1 (Anmelderin) ist bspw. ein Isolierpaneel mit Deckschichten aus faserverstärkten Kunststoffmaterialien bekannt. Derartige Isolierpaneele können durch ein Nass-in-Nass-Verfahren hergestellt werden, bei dem Glasfasermatten mit Harz getränkt und ausgehärtet werden. Dieses Verfahren ist aufwendig und hat Nachteile hinsichtlich der Automatisierbarkeit. Die Herstellung von Isolierpaneelen mit Deckschichten aus faserverstärkten Kunststoffmaterialien wird durch Anwendung des sogenannten SMC-Verfahrens verbessert, bei dem eine fließfähige Harzmatte mit isotropen Eigenschaften und Wirrfaserverteilung in der Mattenebene verwendet wird. Das SMC-Verfahren ermöglicht eine automatisierte Fertigung der Isolierpaneele.

In der DE 10 2013 105 987 A1 ist ein wärmeisolierter Fahrzeugaufbau mit einer verstärkten Bodenlage gezeigt, der ebenfalls auf die Anmelderin zurückgeht. Die Bodenlage bildet eine Sandwichplatte mit einer mittleren Schicht aus einem Schaummaterial zwei äußeren Deckschichten, die aus einem faserverstärkten Kunststoffmaterial gebildet sind. Zur Stabilisierung der Sandwichplatte sind Versteifungsnähte und Versteifungsleisten vorgesehen, die beide Deckschichten einbinden. Die Versteifungsleisten sind mit den Deckschichten durch Kleben oder einen Formschluss verbunden. Um die Versteifungsnähte bzw. die Versteifungsleisten mit den Deckschichten formschlüssig zu verbinden, ist eine entsprechende Formgebung der Deckschichten und/oder der Leisten und Nähte erforderlich. Ferner weisen Klebeverbindungen ein erhöhtes Risiko des Ablösens der Deckschichten von der mittleren Schaumschicht auf.

Der Erfindung liegt die Aufgabe zu Grunde, ein Isolierpaneel für einen Fahrzeugaufbau, insbesondere Kühlfahrzeugaufbau anzugeben, bei dem durch eine verbesserte Verbindung der Deckschichten eine Gesamtstabilität erhöht wird und ein Ablösen der Deckschichten verhindert wird. Der Erfindung liegt ferner die Aufgabe zu Grunde, eine Komponente eines Fahrzeugaufbaus, einen Fahrzeugaufbau und ein Fahrzeug anzugeben.

Erfindungsgemäß wird diese Aufgabe im Hinblick auf das Isolierpaneel durch den Gegenstand des Anspruchs 1 gelöst. Hinsichtlich der Komponente eines Fahrzeugaufbaus, des Fahrzeugaufbaus und des Fahrzeugs wird die vorstehend genannte Aufgabe jeweils durch den Gegenstand des Anspruchs 6 (Komponente), des Anspruchs 7 (Fahrzeugaufbau) und des Anspruchs 8 (Fahrzeug) gelöst.

Konkret wird die Aufgabe durch ein Isolierpaneel für einen Fahrzeugaufbau, insbesondere Kühlfahrzeugaufbau, mit wenigstens einer wärmedämmenden Kernschicht und wenigstens zwei Deckschichten aus einem faserverstärkten Kunststoffmaterial, die auf der Kernschicht einander gegenüber angeordnet sind, gelöst. Die Kernschicht weist wenigstens eine Verbindungsöffnung auf, die durch die Deckschichten ausgefüllt ist, so dass die Deckschichten durch die Kernschicht hindurch miteinander stoffschlüssig verbunden sind.

Durch die Ausbildung der Deckschichten aus faserverstärktem Kunststoffmaterial weist das Isolierpaneel im Unterschied zu herkömmlichen Isolierpaneelen mit metallischen Deckschichten vorteilhaft ein sehr geringes Gewicht auf. Die Deckschichten sind durch die Kernschicht hindurch miteinander stoffschlüssig verbunden. Mit anderen Worten füllen beide Deckschichten die Verbindungsöffnung aus, so dass eine stoffschlüssige Verbindung der beiden Deckschichten miteinander ausgebildet ist. Dies hat den Vorteil, dass die Kernschicht durch die Deckschichten seitlich stabilisiert wird und eine Verbindung der Deckschichten mit der Kernschicht maßgeblich verbessert wird. Ferner ist vorteilhaft, dass ein Ablösen der Deckschichten von der Kernschicht verhindert wird. Das Isolierpaneel weist somit eine sehr hohe Lebensdauer auf.

Des Weiteren weist das Isolierpaneel aufgrund der stoffschlüssigen Verbindung der Deckschichten durch die Kernschicht hindurch vorteilhaft eine hohe Druckstabilität sowie eine hohe Biegesteifigkeit auf. Das Isolierpaneel wird somit durch die stoffschlüssige Verbindung der beiden Deckschichten verstärkt.

Erfindungsgemäß ist wenigstens ein Einlageelement im Bereich der Verbindungsöffnung angeordnet, das als Verstärkungsplatte zur Befestigung von Anbauteilen an dem Isolierpaneel und/oder zur Erhöhung der Stabilität des Isolierpaneel ausgebildet ist. Dadurch sind weitere Möglichkeiten geschaffen, die die mechanischen Funktionen des Isolierpaneels an die speziellen Anforderungen eines Fahrzeugaufbaus bspw. mit Blick auf die Ladungssicherung anzupassen.

Bevorzugte Ausführungsformen der Erfindung sind in den Unteransprüchen angegeben.

Bei einer bevorzugten Ausführungsform durchdringt die Verbindungsöffnung die Kernschicht zum Verbinden der Deckschichten vollständig. Mit anderen Worten ist die Verbindungsöffnung in der Kernschicht derart ausgebildet, dass die Deckschichten durch die Verbindungsöffnung hindurch miteinander verbunden sind. Die Verbindungsöffnung bildet somit einen freien Durchgang zwischen den beiden Deckschichten. Die Verbindungsöffnung kann durch die Deckschichten vollständig und/oder teilweise ausgefüllt sein. Bei einer vollständig ausgefüllten Verbindungsöffnung weisen die Deckschichten eine starke bzw. erhöht stabile stoffschlüssige Verbindung miteinander auf, wodurch eine Gesamtstabilität des Isolierpaneels erhöht wird. Ferner wird dadurch das Risiko eines Ablösens der Deckschichten von der Kernschicht weiter reduziert.

Bei einer teilweise ausgefüllten Verbindungsöffnung kann in dieser bspw. ein Verstärkungselement eingebettet sein. Das Verstärkungselement kann mit der Kernschicht formschlüssig verbunden sein. Alternativ oder zusätzlich kann das Verstärkungselement mit der Kernschicht kraft-reibschlüssig, insbesondere durch ein Einpressen, fest verbunden sein. Das Verstärkungselement kann vorteilhaft eine Paneelstabilität erhöhen sowie zusätzlich funktionale Aufgaben übernehmen, wie z.B. zur Befestigung von Anbauteilen eingesetzt werden. Bei dieser Variante ist denkbar, dass die Deckschichten durch das Verstärkungselement hindurch miteinander stoffschlüssig verbunden sind.

Vorzugsweise weist wenigstens eine der Deckschichten im Bereich der Verbindungsöffnung eine erhöhte Schichtdicke auf. Die Kernschicht kann dazu um Bereich der Verbindungsöffnung wenigstens eine Ausnehmung aufweisen, die durch die jeweilige Deckschicht ausgefüllt ist. Dies hat den Vorteil, dass eine Stabilität der Verbindungsstelle zwischen den beiden Deckschichten erhöht wird. Ferner sind im Bereich der Verbindungsstelle durch die erhöhte Schichtdicke Kräfte verbessert in das Isolierpaneel einleitbar bzw. vom Isolierpaneel verbessert ableitbar.

Bei einer weiteren bevorzugten Ausführungsform weisen die Deckschichten wenigstens einen gemeinsamen Verbindungsabschnitt auf, der sich durch die Verbindungsöffnung erstreckt und durch den die Deckschichten die Kernschicht seitlich stabilisieren. Der Verbindungsabschnitt verbindet die Deckschichten miteinander. Der Verbindungsabschnitt kann durch ein miteinander Verfließen der Deckschichten in der Verbindungsöffnung gebildet sein. Mit anderen Worten kann durch das miteinander Verfließen der Deckschichten in der Verbindungsöffnung der Verbindungsabschnitt ausgebildet werden, durch den die Deckschichten miteinander stoffschlüssig verbunden sind. Der Verbindungsabschnitt kann zylindrisch ausgebildet sein. Der Verbindungsabschnitt kann im Querschnitt eine eckige Form aufweisen. Ferner kann der Verbindungsabschnitt als Verbindungsspalt ausgebildet sein, der die beiden Deckschichten miteinander stoffschlüssig verbindet. Der Verbindungsspalt erstreckt sich dabei vollständig durch die Kernschicht. Mit anderen Worten kann der Verbindungsabschnitt spaltförmig ausgebildet sein. Es ist auch denkbar, dass der Verbindungsabschnitt durch einen Verbindungssteg gebildet ist.

Bei einer weiteren bevorzugten Ausführungsform ist die Kernschicht aus zusammengesetzten Kernschichtelementen, insbesondere geschäumten Kernschichtblöcken, gebildet, wobei der Verbindungsabschnitt jeweils zwischen den einzelnen Kernschichtelementen vorgesehen ist. Dies hat den Vorteil, dass kleinere und besser zu handhabende Kernschichtelemente einsetzbar sind. Dadurch wird zur Herstellung der Kernschichtelemente eine kleinere Größe der Herstellungsmaschinen ermöglicht. Des Weiteren wird dadurch vorteilhaft eine Lagerung der Kernschichtelemente erleichtert. Ferner sind dadurch keine oder nur eine geringe Anzahl an Hebeanlagen zur Handhabung der Kernschichtelemente erforderlich. Es ist auch denkbar, dass die einzelnen Kernschichtelemente einfach und schnell per Hand zu einer Kernschicht zusammengesetzt werden. Die Kernschicht kann somit gemäß dem Baukastenprinzip (Puzzle) aus den einzelnen Kernschichtelementen zusammengesetzt sein. Dadurch kann vorteilhaft das Isolierpaneel in jeder Größe anforderungsspezifisch bzw. individuell hergestellt werden.

Der Verbindungsabschnitt kann einen Stoss bilden, an den die einzelnen Kernschichtelemente angrenzend angeordnet sind. Mit anderen Worten kann der Verbindungsabschnitt die Kernschichtelemente voneinander trennen. Der Verbindungsabschnitt kann sich teilweise oder über die gesamte Höhe des Isolierpaneels durch die Kernschicht hindurch erstrecken und die Deckschichten miteinander stoffschlüssig verbinden. Alternativ oder zusätzlich ist denkbar, dass sich der Verbindungsabschnitt teilweise oder über die gesamte Länge des Isolierpaneels durch die Kernschicht hindurch erstreckt und die Deckschichten miteinander stoffschlüssig verbindet.

Es ist denkbar, dass die einzelnen Kernschichtelemente wenigstens eine Verbindungsöffnung aufweisen, durch die hindurch die Deckschichten miteinander stoffschlüssig verbunden sind. Die Verbindungsöffnung kann dabei im Kernschichtelement ausgebildet sein. Mit anderen Worten können die Deckschichten wenigstens einen Verbindungsabschnitt aufweisen, der das einzelne Kernschichtelement die Deckschichten miteinander stoffschlüssig verbindet. Es ist auch denkbar, dass die Kernschicht mehrere Verbindungsöffnungen aufweist, die zwischen den einzelnen Kernschichtelementen und/oder in den einzelnen Kernschichtelementen vorgesehen sind. Mit anderen Worten können die Deckschichten zwischen den einzelnen Kernschichtelementen hindurch und/oder durch die einzelnen Kernschichtelemente hindurch miteinander stoffschlüssig verbunden sein.

Ein nebengeordneter Aspekt der Erfindung betrifft eine Komponente eines Fahrzeugaufbaus, insbesondere Kühlfahrzeugaufbaus, die wenigstens ein erfindungsgemäßes Isolierpaneel aufweist. Besonders bevorzugt ist die gesamte Komponente aus einem oder mehreren erfindungsgemäßen Isolierpaneelen zusammengesetzt. Als Komponente kommen beispielsweise eine Seitenwand, d. h. die in Fahrtrichtung des Fahrzeugaufbaus sich erstreckende Längswand, und/oder eine Vorderwand und/oder eine Decke und/oder ein Boden und/oder eine oder beide Hecktüren des Fahrzeugaufbaus infrage. Die Komponenten des Fahrzeugaufbaus bilden sofern Außenteile des Fahrzeugaufbaus, als diese den Ladeinnenraum von der Umgebung wärmedämmend isolieren.

Ein weiterer nebengeordneter Aspekt der Erfindung betrifft einen Fahrzeugaufbau, insbesondere Kühlfahrzeugaufbau, mit wenigstens einem erfindungsgemäßen Isolierpaneel. Es ist möglich, dass der Fahrzeugaufbau teilweise oder vollständig aus erfindungsgemäßen Isolierpaneelen aufgebaut ist.

Im Rahmen der Erfindung wird ferner ein Fahrzeug mit wenigstens einem erfindungsgemäßen Isolierpaneel offenbart und beansprucht. Bei dem Fahrzeug mit dem erfindungsgemäßen Isolierpaneel kann es sich beispielsweise um ein Kühlfahrzeug, insbesondere einen Sattelauflieger, der als Kühlfahrzeug (Kühlauflieger) ausgebildet ist, handeln.

Bei einem Verfahren zur Herstellung eines Isolierpaneels wird in einem ersten Schritt eine Kernschicht aus wenigstens einem wärmedämmenden, insbesondere geschäumten, Material bereitgestellt, wobei die Kernschicht wenigstens eine Verbindungsöffnung aufweist. In einem zweiten Schritt wird die Kernschicht und die Verbindungsöffnung mit einem faserverstärkten, insbesondere glasfaserverstärkten, Kunststoffmaterial zur Bildung zweier Deckschichten besprüht. In einem dritten Schritt wird die Kernschicht mit den Deckschichten verpresst. Die Verbindungsöffnung wird dabei mit dem faserverstärkten Kunststoffmaterial ausgefüllt. Beide Deckschichten werden miteinander stoffschlüssig verbunden.

Bei einer bevorzugten Ausführungsform des Herstellungsverfahrens wird beim Verpressen eine ebene und/oder glatte Außenseite der jeweiligen Deckschicht gebildet.

Zu den Vorteilen der Komponente, des Fahrzeugaufbaus und des Fahrzeugs wird auf die im Zusammenhang mit dem Isolierpaneel erläuterten Vorteile verwiesen. Darüber hinaus können die Komponente, der Fahrzeugaufbau und das Fahrzeug alternativ oder zusätzlich einzelne oder eine Kombination mehrerer zuvor in Bezug auf das Isolierpaneel genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie das erfindungsgemäße Isolierpaneel ausgestaltet sein kann.

In diesen zeigen,
- Fig. 1: eine Teilansicht eines Querschnitts durch ein Isolierpaneel nach einem Ausführungsbeispiel im Bereich einer ausgefüllten Verbindungsöffnung;
- Fig. 2: eine Teilansicht eines Querschnitts durch ein Isolierpaneel nach einem weiteren Ausführungsbeispiel im Bereich einer ausgefüllten Verbindungsöffnung zwischen zwei Kernschichtelementen; und
- Fig. 3: eine Teilansicht eines Querschnitts durch ein Isolierpaneel nach einem erfindungsgemäßen Ausführungsbeispiel im Bereich eines eingebetteten Einlageelements;

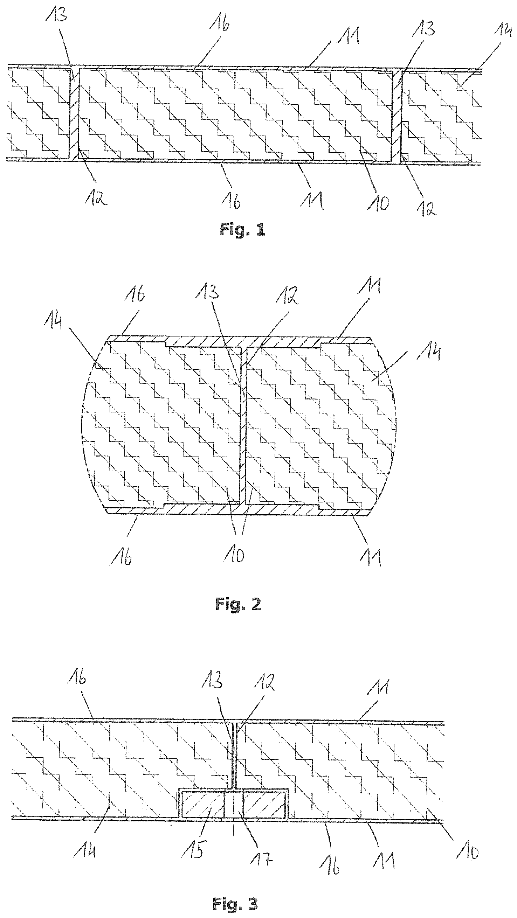

Die Fig. 1-3 zeigen ein Isolierpaneel für einen Fahrzeugaufbau, das bspw. als Wärmedämmplatte bevorzugt im Kühlfahrzeugbau zur Herstellung eines Fahrzeugaufbaus eingesetzt wird. Das Isolierpaneel dient hierbei in erster Linie als wärmedämmendes Wandelement und/oder als wärmedämmendes Bodenelement und/oder als wärmedämmendes Deckenelement und/oder als wärmedämmendes Türelement. Andere Anwendungen sind möglich.

Das Isolierpaneel umfasst eine Kernschicht 10 und zwei Deckschichten 11 aus einem faserverstärkten Kunststoffmaterial, die auf der Kernschicht 10 einander gegenüber angeordnet sind. Die Deckschichten 11 können einseitig, doppelseitig bzw. auf mehreren Seiten der Kernschicht 10 ausgebildet sein. Die Deckschichten 11 können die Kernschicht 10 vollständig ummanteln bzw. einkapseln.

Die Kernschicht 10 kann aus zusammengesetzten Kernschichtelementen 14, insbesondere geschäumten Kernschichtblöcken, gebildet sein. Mit anderen Worten kann die Kernschicht 10 mehrteilig ausgebildet sein. Alternativ kann die Kernschicht 10 einstückig, insbesondere einteilig, ausgebildet sein. Mit anderen Worten kann die Kernschicht 10 durch ein einziges Kernschichtelement 14 gebildet sein.

Die Fig. 1-3 zeigen Isolierpaneele mit einer Kernschicht 10, die wenigstens eine Verbindungsöffnung 12 aufweist. Die Verbindungsöffnung 12 ist durch die Deckschichten 11 ausgefüllt, so dass die Deckschichten 11 durch die Kernschicht 10 hindurch miteinander stoffschlüssig verbunden sind. Die Fig. 1-3 zeigen unterschiedliche Varianten der stoffschlüssigen Verbindung der Deckschichten 11 durch die Kernschicht 10 hindurch.

Gemäß Fig. 1 ist einen Querschnitt durch ein Isolierpaneel mit einer Kernschicht 10, wie vorstehend beschrieben gezeigt, die wenigstens zwei Verbindungsöffnungen 12 aufweist. Die Verbindungsöffnungen 12 sind jeweils im Kernschichtelement 14 der Kernschicht 10 ausgebildet. Die Verbindungsöffnungen 12 können durch Bohrungen oder Fräsungen gebildet sein. Die Verbindungsöffnungen 12 können im Querschnitt eckig, insbesondere vieleckig ausgebildet sein.

Die Verbindungsöffnungen 12 durchdringen die Kernschicht 10 zum Verbinden der Deckschichten 11 vollständig. Konkret durchdringen die Verbindungsöffnungen 12 die Kernschicht 10 über den gesamten Querschnitt.

Es ist auch denkbar, dass die Kernschicht 10 bzw. das Kernschichtelement 14 mehrere, insbesondere mehr als zwei, Verbindungsöffnungen 12 aufweist, die durch die Deckschichten 11 ausgefüllt sind, so dass die Deckschichten 11 durch die Kernschicht 10 bzw. das Kernschichtelement 14 hindurch miteinander stoffschlüssig verbunden sind.

In den Verbindungsöffnungen 12 ist jeweils ein Verbindungsabschnitt 13 angeordnet, der die beiden Deckschichten 11 durch die Kernschicht 10 bzw. das Kernschichtelement 14 hindurch stoffschlüssig miteinander verbindet. Der Verbindungsabschnitt 13 erstreckt sich dabei durch die Verbindungsöffnung 12. Der Verbindungsabschnitt 13 ist durch das Ausfüllen der jeweiligen Verbindungsöffnung 12 durch die Deckschichten 11 gebildet.

Der Verbindungsabschnitt 13 kann zylindrisch ausgebildet sein oder im Querschnitt eine eckige Form aufweisen. Der Verbindungsabschnitt 13 bildet im Wesentlichen eine Positivform zur Negativform der zugehörigen Verbindungsöffnung 12. Mit anderen Worten sind die Verbindungsöffnungen 12 durch die Deckschichten 11 vollständig ausgefüllt. Alternativ können die Verbindungsöffnungen 12 oder einzelne Verbindungsöffnungen 12 durch die Deckschichten 11 teilweise ausgefüllt sein.

Die Verbindungsöffnungen 12 können jeweils zur formschlüssigen Verbindung mit dem Verbindungsabschnitt 13 mit einer Struktur versehen sein. Die Verbindungsöffnungen 12 können dazu auch Rillen oder Formschlussfortsätze oder Formschlusseinkerbungen aufweisen. Hierbei kann ein nicht dargestelltes Verstärkungselement eingebettet sein. Das Verstärkungselement kann mit der Kernschicht 10 formschlüssig verbunden sein. Alternativ oder zusätzlich kann das Verstärkungselement mit der Kernschicht kraft-reibschlüssig, insbesondere durch ein Einpressen, mit der Kernschicht 10 bzw. das Kernschichtelement 14 fest verbunden sein.

Fig. 2 zeigt einen Querschnitt durch ein Isolierpaneel mit einer Kernschicht 10, die aus wenigstens zwei Kernschichtelementen 14 zusammengesetzt ist. Auf der Kernschicht 10 sind zwei Deckschichten 11 einander gegenüber angeordnet. Die Deckschichten 11 sind durch eine Verbindungsöffnung 12 hindurch miteinander stoffschlüssig verbunden. Die Verbindungsöffnung 12 ist dabei durch beide Deckschichten 11 vollständig ausgefüllt. Die beiden Deckschichten 11 bilden durch die Verbindungsöffnung 12 hindurch einen Verbindungsabschnitt 13, durch den die Deckschichten 11 stoffschlüssig miteinander verbunden sind.

Der Verbindungsabschnitt 13 ist als Verbindungsspalt ausgebildet, der die beiden Deckschichten 13 miteinander stoffschlüssig verbindet. Der Verbindungsabschnitt 13 erstreckt sich vollständig durch die Kernschicht 10 und ist zwischen den Kernschichtelementen 14 angeordnet. Mit anderen Worten ist der Verbindungsabschnitt 13 spaltförmig ausgebildet. Es ist auch denkbar, dass der Verbindungsabschnitt 13 durch einen Verbindungssteg gebildet, der die beiden Deckschichten miteinander stoffschlüssig verbindet. Die Kernschichtelemente 14 können durch den Verbindungsabschnitt 13 vollständig voneinander getrennt sein.

Der Verbindungsabschnitt 13 bildet einen Stoss, an den die einzelnen Kernschichtelemente 14 angrenzend angeordnet sind. Der Verbindungsabschnitt 13 kann sich teilweise oder über die gesamte Höhe des Isolierpaneels durch die Kernschicht 10 hindurch erstrecken und die Deckschichten 11 miteinander stoffschlüssig verbinden. Alternativ oder zusätzlich ist denkbar, dass sich der Verbindungsabschnitt 13 teilweise oder über die gesamte Länge des Isolierpaneels durch die Kernschicht 10 hindurch erstreckt und die Deckschichten 11 miteinander stoffschlüssig verbindet.

Wie in Fig. 2 ersichtlich, weisen die Kernschichtelemente 14 im Bereich der Verbindungsöffnung 12 bzw. des Verbindungsabschnitts 13 jeweils eine Ausnehmung auf, die durch die Deckschichten 11 ausgefüllt ist. Die Deckschichten 11 weisen somit im Bereich der Verbindungsöffnung 12 bzw. des Verbindungsabschnitts 13 eine erhöhte Schichtdicke auf.

Gemäß Fig. 3 ist im Unterschied zu den Fig. 1 und 2 ein Einlageelement 15 im Bereich der Verbindungsöffnung 12 angeordnet. Das Einlageelement 15 ist zwischen einer der Deckschichten 11 und dem Verbindungsabschnitt 13 eingebettet. Das Einlageelement 15 weist eine Durchgangsöffnung 17 auf, die durch die Deckschicht 11 von außen frei zugänglich ist. Mit anderen Worten ist das Einlageelement 15 bis auf die Durchgangsöffnung 17 vollständig durch das faserverstärkte Kunststoffmaterial der Deckschichten 11 ummantelt. Das Einlageelement 15 kann als Verstärkungsplatte zur Befestigung von Anbauteilen an dem Isolierpaneel und/oder zur Erhöhung der Stabilität des Isolierpaneels ausgebildet sein.

Die in Fig. 1-3 beschriebenen Isolierpaneele werden gemäß einem Herstellungsverfahren wie folgt hergestellt.

In einem ersten Schritt wird eine Kernschicht 10 aus wenigstens einem wärmedämmenden, insbesondere geschäumten, Material bereitgestellt. Die Kernschicht 10 kann einteilig ausgebildet sein oder aus wenigstens zwei einzelnen Kernschichtelementen 14 zusammengesetzt sein. Die Kernschicht 10 umfasst dabei wenigstens eine Verbindungsöffnung 12, wie vorstehend beschrieben.

In einem zweiten Schritt erfolgt ein Besprühen der Kernschicht 10 und der wenigstens einen Verbindungsöffnung 12 mit einem faserverstärkten, insbesondere glasfaserverstärkten, Kunststoffmaterial zur Bildung der Deckschichten 11. Das faserverstärkte Kunststoffmaterial wird auf zwei gegenüber angeordneten Außenseiten 16 der Kernschicht 10 aufgesprüht derart, dass die Deckschichten 11 auf der Kernschicht 10 ausgebildet werden. Beim Aufsprühen tritt das Kunststoffmaterial von beiden Seiten der Kernschicht 10 in die Verbindungsöffnung 12 ein. Es ist auch denkbar, dass das Kunststoffmaterial lediglich von einer der Außenseiten 16 der Kernschicht 10 in die Verbindungsöffnung 12 eintritt. Dazu kann auf der Außenseite 16 ein Überschuss des Kunststoffmaterials vorgesehen werden.

In einem weiteren, insbesondere dritten, Schritt wird die Kernschicht 10 mit den Deckschichten 11 verpresst. Dabei wird die Verbindungsöffnung 12 mit dem faserverstärkten Kunststoffmaterial ausgefüllt und beide gegenüber aufgetragene Deckschichten 11 miteinander stoffschlüssig verbunden. Die einzelnen Deckschichten 11 werden gleichzeitig mit der Kernschicht 10 verpresst. Beim Verpressen wird eine ebene bzw. glatte Außenoberfläche der Deckschicht 11 ausgebildet.

Bei einer ersten alternativen Variante des Herstellungsverfahrens ist denkbar, dass nach dem Bereitstellen eine erste Außenseite 16 der Kernschicht 10 mit dem faserverstärkten Kunststoffmaterial zur Bildung einer ersten Deckschicht 11 besprüht wird und anschließend mit der Kernschicht 10 verpresst wird. Anschließend bzw. danach wird eine zweite Außenseite 16 der Kernschicht 10 mit dem faserverstärkten Kunststoffmaterial zur Bildung einer zweiten Deckschicht 11 besprüht und anschließend mit der Kernschicht 10 verpresst. Die Ausbildung der einzelnen Deckschichten 11 wird hierbei nacheinander durchgeführt.

Ferner ist denkbar, dass bei einer zweiten alternativen Variante des Herstellungsverfahrens vor oder nach dem Bereitstellen der Kernschicht 10 eine erste Gegenseite, insbesondere eine unten angeordnete Gegenseite, einer Pressvorrichtung mit einem Trennmittel besprüht wird. Danach wird die erste Gegenseite der Pressvorrichtung mit dem faserverstärkten Kunststoffmaterial zur Bildung einer ersten Deckschicht 11 besprüht. Anschließend wird die Kernschicht 10 bzw. werden die Kernschichtelemente 14 der Kernschicht 10 mit einer ersten Außenseite 16, insbesondere einer Unterseite, auf das aufgesprühte faserverstärkte Kunststoffmaterial der ersten Gegenseite der Pressvorrichtung aufgelegt.

In einem weiteren Schritt wird eine zweite Außenseite 16, insbesondere eine Oberseite, der aufgelegten Kernschicht 10 mit dem faserverstärkten Kunststoffmaterial zur Bildung einer zweiten Deckschicht 11 besprüht. Ferner wird eine zweite Gegenseite, insbesondere eine oben angeordnete Gegenseite, der Pressvorrichtung mit einem Trennmittel besprüht. Das Besprühen der zweiten Gegenseite mit dem Trennmittel kann zeitlich unabhängig von den anderen genannten Verfahrensschritten erfolgen.

Anschließend wird die Kernschicht 10 durch die Pressvorrichtung mit den Deckschichten 11 verpresst. Dabei wird die Verbindungsöffnung 12 mit dem Kunststoffmaterial ausgefüllt und beide gegenüber aufgetragene Deckschichten 11 miteinander stoffschlüssig verbunden. Beim Verpressen wird eine ebene bzw. glatte Außenoberfläche der Deckschicht 11 ausgebildet.

Bei dem vorstehend beschriebenen Herstellungsverfahren sowie den beschriebenen zwei alternativen Varianten des Herstellungsverfahrens wird die Verbindungsöffnung 12 beim Verpressen der Kernschicht 10 mit den Deckschichten 11 mit dem faserverstärkten Kunststoffmaterial ausgefüllt. Es ist auch denkbar, dass die Verbindungsöffnung 12 der Kernschicht 10 vor dem Verpressen in einem separaten Verfahrensschritt mit dem faserverstärkten Kunststoffmaterial besprüht und/oder ausgefüllt wird. Hierbei wird beim Verpressen anschließend das Kunststoffmaterial in der Verbindungsöffnung 12 mit dem Kunststoffmaterial der Deckschichten 11 verpresst derart, sodass eine stoffschlüssige Verbindung der beiden Deckschichten 11 hergestellt wird.

Gemäß den vorstehend beschriebenen Verfahren entspricht das faserverstärkte Kunststoffmaterial in der Verbindungsöffnung 12 dem faserverstärkten Kunststoffmaterial der Deckschichten 11.

Alternativ kann das faserverstärkte Kunststoffmaterial zum Ausfüllen der Verbindungsöffnung 12 einen geringeren Faserstoffanteil aufweisen als das faserverstärkte Kunststoffmaterial der Deckschichten 11. Vorteilhaft wird dadurch ein Fließverhalten des Kunststoffmaterials zum Ausfüllen der Verbindungsöffnung 12 verbessert. Ferner kann das faserverstärkte Kunststoffmaterial zum Ausfüllen der Verbindungsöffnung 12 kürzere, insbesondere kürzer geschnittene, Fasern aufweisen als das faserverstärkte Kunststoffmaterial der Deckschichten 11. Alternativ kann die Verbindungsöffnung 12 mit einem faserlosen Kunststoffmaterial ausgefüllt werden, um beim Ausfüllen der Verbindungsöffnung 12 ein verbessertes Fließverhalten zu erreichen. Mit anderen Worten kann die Verbindungsöffnung 12 mit einem Kunststoffmaterial ausgefüllt werden, das keine Fasern enthält.

### Bezuaszeichenliste

- 10: Kernschicht
- 11: Deckschicht
- 12: Verbindungsöffnung
- 13: Verbindungsabschnitt
- 14: Kernschichtelement
- 15: Einlageelement
- 16: Außenseite der Deckschicht
- 17: Durchgangsöffnung

## Patentansprüche

1. Isolierpaneel für einen Fahrzeugaufbau, insbesondere Kühlfahrzeugaufbau, mit wenigstens einer wärmedämmenden Kernschicht (10) und wenigstens zwei Deckschichten (11) aus einem faserverstärkten Kunststoffmaterial, die auf der Kernschicht (10) einander gegenüber angeordnet sind, wobei
die Kernschicht (10) wenigstens eine Verbindungsöffnung (12) aufweist, die durch die Deckschichten (11) ausgefüllt ist, so dass die Deckschichten (11) durch die Kernschicht (10) hindurch miteinander stoffschlüssig verbunden sind,
**dadurch gekennzeichnet, dass**
wenigstens ein Einlageelement (15) im Bereich der Verbindungsöffnung (12) angeordnet ist, das als Verstärkungsplatte zur Befestigung von Anbauteilen an dem Isolierpaneel und/oder zur Erhöhung der Stabilität des Isolierpaneel ausgebildet ist.

2. Isolierpaneel nach Anspruch 1,
**dadurch gekennzeichnet, dass**
die Verbindungsöffnung (12) die Kernschicht (10) zum Verbinden der Deckschichten (11) vollständig durchdringt.

3. Isolierpaneel nach Anspruch 1 oder 2,
**dadurch gekennzeichnet, dass**
wenigstens eine der Deckschichten (11) im Bereich der Verbindungsöffnung (12) eine erhöhte Schichtdicke aufweist.

4. Isolierpaneel nach einem der vorhergehenden Ansprüche,
**dadurch gekennzeichnet, dass**
die Deckschichten (11) wenigstens einen gemeinsamen Verbindungsabschnitt (13) aufweisen, der sich durch die Verbindungsöffnung (12) erstreckt und durch den die Deckschichten (11) die Kernschicht (10) seitlich stabilisieren.

5. Isolierpaneel nach Anspruch 4,
**dadurch gekennzeichnet, dass**
die Kernschicht (10) aus zusammengesetzten Kernschichtelementen (14), insbesondere geschäumten Kernschichtblöcken, gebildet ist, wobei der Verbindungsabschnitt (13) jeweils zwischen den einzelnen Kernschichtelementen (14) vorgesehen ist.

6. Komponente eines Fahrzeugaufbaus, insbesondere Kühlfahrzeugaufbaus, umfassend eine Hecktüre und/oder eine Seitenwand und/oder eine Vorderwand und/oder eine Decke und/oder ein Boden jeweils mit wenigstens einem Isolierpaneel nach Anspruch 1.

7. Fahrzeugaufbau, insbesondere Kühlfahrzeugaufbau, mit wenigstens einem Isolierpaneel nach Anspruch 1.

8. Fahrzeug, insbesondere Kühlfahrzeug, mit wenigstens einem Isolierpaneel nach Anspruch 1.
